# EUROPÄISCHE PATENTSCHRIFT

(11) **EP 0 825 094 B1**
(45) Veröffentlichungstag und Bekanntmachung des Hinweises auf die Patenterteilung: **11.07.2001**
(21) Anmeldenummer: 97113480.4
(22) Anmeldetag: 05.08.1997
(51) Int. Cl.: B62D 25/08

(54) **Karosserievorderbau für ein Kraftfahrzeug**
Front bodywork for a motor vehicle
Carrosserie avant pour un véhicule à moteur

(30) Priorität: 14.08.1996 DE 19632712; 28.06.1997 DE 19727615
(43) Veröffentlichungstag der Anmeldung: 25.02.1998
(73) Patentinhaber: ADAM OPEL AG, 65423 Rüsselsheim (DE)
(72) Erfinder: Altmayer, Ingo, Dipl.-Ing. (FH), 63755 Alzenau (DE); Brandel, Klaus, 65205 Wiesbaden (DE); Mildner, Udo, Dipl.-Ing. (FH), 65550 Limburg (DE); Ringel, Franz-Josef, 55129 Mainz-Hechtsheim (DE); Bechtold, Ralf, 55278 Weinolsheim (DE); Hallik, Matthias, Dipl.-Ing., 65197 Wiesbaden (DE)

(56) Entgegenhaltungen:
- EP-A- 0 291 385
- WO-A-92/11165
- DE-A- 2 713 604
- DE-A- 2 725 083
- DE-A- 3 720 847

## Beschreibung

Die Erfindung betrifft einen Karosserievorderbau gemäß dem Oberbegriff des Anspruchs 1.

Ein solcher Karosserievorderbau ist beispielsweise in der DE-C-37 20 847 beschrieben. Bei ihm verläuft an jeder Fahrzeugseite ein Längsträger zunächst horizontal bis hinter die Federbeinaufnahme und führt dann schräg nach unten, um im Bereich der A-Säule in die Türschweller überzugehen. Hinter der Federbeinaufnahme stützt sich der Längsträger gegen einen Gabelträger ab. Von diesem führt ein Gabelarm oberhalb einer Verbindungsstelle mit einem nach unten führenden Bereich des Längsträgers an die A-Säule. Die Federbeinaufnahme ist auf in der Schrift nicht näher beschriebene Weise vor dem Gabelträger mit dem Längsträger verbunden.

Auch die DE-C-27 25 083 zeigt bereits, wie ein Vorderrahmen mit seinen zwei Längsträgern jeweils an zwei übereinanderliegenden Stellen mit der A-Säule verbunden ist. Dadurch entstehen, genau wie bei dem zuvor genannten Vorderbau, zwei Lastpfade, über die bei einem seitlich versetzten Frontalaufprall die Kräfte in das Kraftfahrzeug geleitet werden können. Die Schrift befaßt sich jedoch ebenfalls nicht mit der Anbindung der Federbeinaufnahme. Diese wird bei fast allen derzeitigen Kraftfahrzeugen im Vorderbau des Kraftfahrzeugs am Radeinbau und/oder dem Stirnwandschottblech abgestützt. Das führt jedoch zu einer oftmals nicht ausreichenden Steifigkeit der vorderen Federbeinaufnahmen.

Aus der EP 0 825 094 A1 ist ein Vorderbau bekannt, bei dem an jeder Fahrzeugseite der stabile Längsträger teilweise um die domförmige Federbeinaufnahme "gewickelt" ist. Dadurch sind die Federbeinaufnahmen ungewöhnlich fest mit dem Fahrzeugvorderbau verbunden und weisen eine große Quersteifigkeit auf. Da sich die Längsträger jeweils hinter der Federbeinaufnahme gabeln und an zwei übereinander liegenden Stellen mit der A-Säule verbunden sind, kommt es bei einem Offsetcrash zu keiner Überbeanspruchung der jeweiligen A-Säule und der an ihr befestigen Tür. Außerdem ist der Kraftfahrzeugvorderbau so gestaltet, daß ein entlang des Teilbereichs der Mantelfläche der Federbeinaufnahme verlaufendes Profilteil aufgesetzt und der obere Gabelarm an dieses Profilteil angeschlossen ist.

Der Erfindung liegt das Problem zugrunde, einen Kraftfahrzeugvorderbau der eingangs genannten Art so auszubilden, daß mit möglichst geringem Materialeinsatz die vorderen Federbeinaufnahmen optimal abgestützt sind und sich dabei zugleich ein möglichst gutes Crashverhalten ergibt.

Dieses Problem wird erfindungsgemäß dadurch gelöst, daß das Profilteil mit dem oberen Gabelarm von der Motorrauminnenseite aus über 90° entlang der Federbeinaufnahme verläuft und dann mit der A-Säule Verbindung hat.

Zur weiteren Verringerung des baulichen Aufwands trägt eine andere Ausgestaltung der Erfindung bei, gemäß der das Profilteil winkelförmig ausgebildet und mit einem zumindest in etwa horizontal ausgerichteten Schenkel an der Federbeinaufnahme angeschweißt ist und bei der der andere, in etwa senkrecht verlaufende Schenkel Verbindung mit einer unteren Stirnwand des Kraftfahrzeugs hat.

Mit den folgenden Maßnahmen soll erreicht werden, einen Kraftfahrzeugvorderbau der bisher beschriebenen Art so auszubilden, daß mit möglichst geringem Materialeinsatz die vorderen Federbeinaufnahmen noch besser abgestützt sind und dabei zugleich auch das Crashverhalten des Fahrzeuges weiter verbessert ist.

Dieses Problem wird dadurch gelöst, daß sich an dem an der Federbeinaufnahme anliegenden Abschnitt des Längsträgers eine nach vorne gerichtete Zusatzstrebe anschließt.

Zur weiteren Abstützung der Federbeinaufnahme und zur Bildung eines weiteren Lastpfades wird somit eine Zusatzstrebe zwischen der Federbeinaufnahme und dem vorderen Rahmen des Motorraums gezogen. Diese Zusatzstrebe ist integraler Bestandteil eines mit dem Längsträger verbundenen Profilteils und verläuft in etwa parallel und oberhalb des vorderen Arms des jeweiligen Längsträgers.

Konstruktiv besonders einfach ist der Kraftfahrzeugvorderbau gestaltet, wenn gemäß einer Weiterbildung der Erfindung auf dem Längsträger ein entlang des Teilbereichs der Mantelfläche der Federbeinaufnahme verlaufendes Profilteil aufgesetzt und der obere Gabelarm und die Zusatzstrebe an diesem Profilteil angeschlossen sind.

Vorzugsweise ist das vordere Ende der Zusatzstrebe gegenüber dem vorderen Ende des Längsträgers nach hinten versetzt, so daß bei einer leichten Kollision lediglich der Längsträger in Mitleidenschaft gezogen wird, während bei einer schweren Kollision, die Krafteinleitung in etwa gleichmäßig in die Zusatzstrebe und in den Längsträger erfolgt.

Die Erfindung läßt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1:: eine Seitenansicht eines erfindungsgemäßen vorderen Längsträgers eines Vorderbaus eines Kraftfahrzeugs mit angrenzenden Bauteilen,
- Fig. 2:: eine Draufsicht auf die Anordnung nach der Fig. 1,
- Fig. 3:: einen Schnitt durch die Anordnung nach der Fig. 2, entlang der Linie III - III in der Fig. 2,
- Fig. 4:: eine perspektivische Ansicht des Längsträgers im Bereich seiner Anbindung an die Federbeinaufnahme,
- Fig. 5:: eine Seitenansicht (Sicht von innen nach außen) eines erfindungsgemäßen Längsträgers eines Vorderbaus eines Kraftfahrzeugs mit angrenzenden Bauteilen und
- Fig. 6:: eine Draufsicht auf die (spiegelbildlich dargestellte) Anordnung nach der Fig. 5.

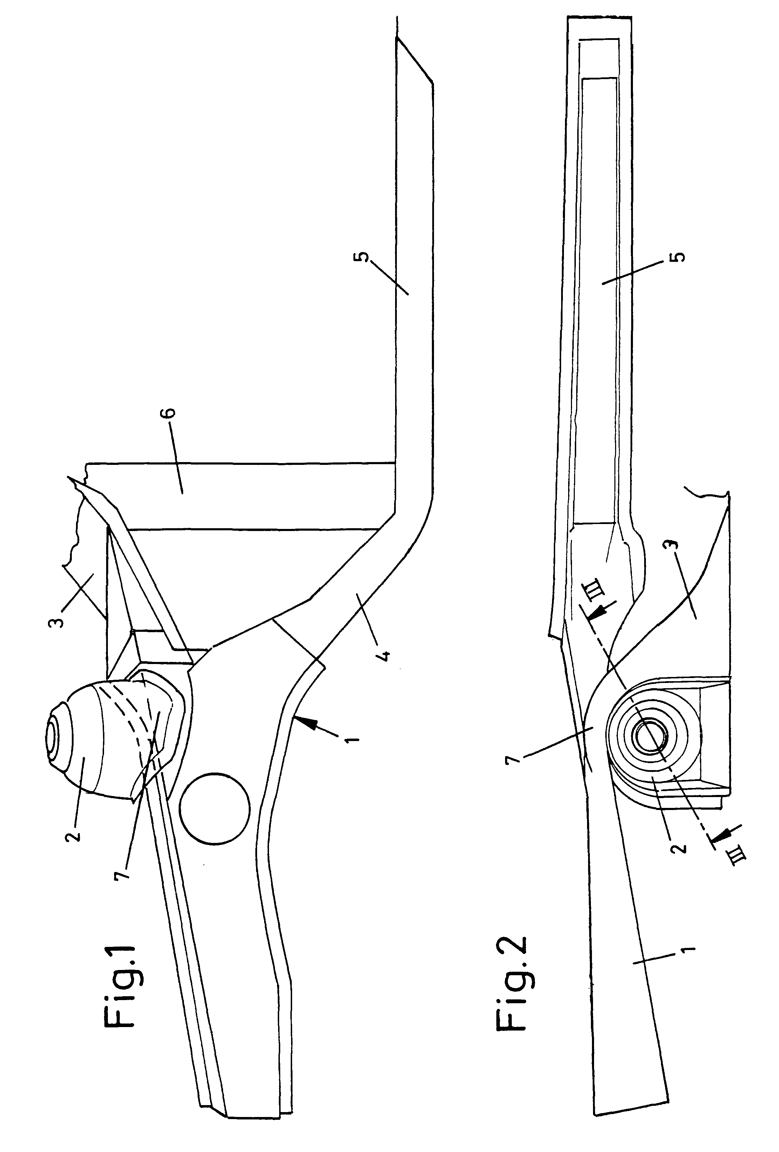

Die Fig. 1 zeigt von einem Vorderbau eines Kraftfahrzeugs einen zu einem Vorderrahmen gehörenden Längsträger 1. Dieser gabelt sich hinter einer allgemein als Dom bezeichneten Federbeinaufnahme 2 in einen oberen Gabelarm 3 und einem unteren Gabelarm 4. Der untere Gabelarm 4 verläuft schräg nach unten und geht in einen horizontal verlaufenden Türschweller 5 oder ein parallel zum Türschweller 5 verlaufendes Längsprofil über. Schematisch dargestellt ist eine A-Säule 6, an die der untere Gabelarm 4 und der obere Gabelarm 3 angeschlossen sind.

Wichtig für die Erfindung ist ein Profilteil 7, welches an der Oberseite des Längsträgers 1 angeformt ist und das sich über einen Teilbereich der Mantelfläche der Federbeinaufnahme 2 erstreckt und dort mit ihr verschweißt ist. An diesem Profilteil 7 ist der obere Gabelarm 3 angeschlossen.

Die Fig. 2 verdeutlicht, daß sich das Profilteil 7 des Längsträgers 1 über etwa 90° der Mantelfläche der Federbeinaufnahme 2 erstreckt.

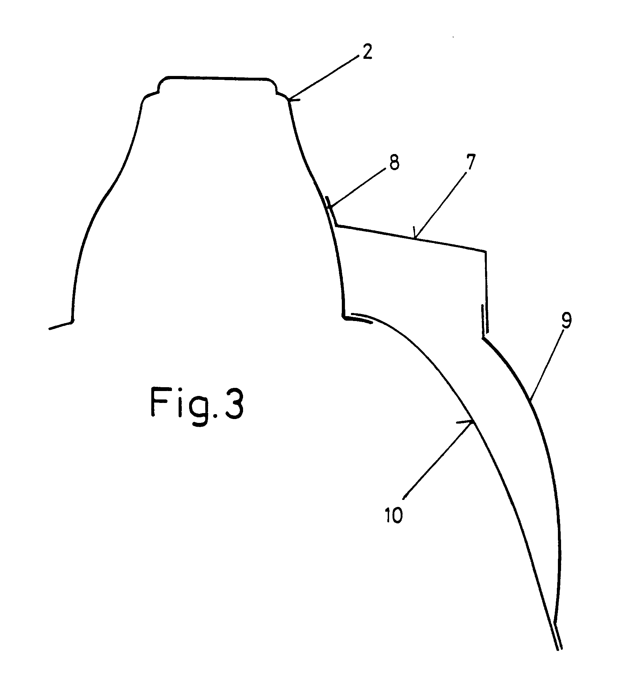

Die Schnittdarstellung gemäß Fig. 3 zeigt die Federbeinaufnahme 2 und das an ihr angeschweißte Profilteil 7. Dieses ist von der Seite aus gesehen winkelförmig ausgebildet und liegt mit einem Schweißflansch 8 seines horizontalen Schenkels gegen die Federbeinaufnahme 2 an. Am unteren Rand seines vertikalen Schenkels ist eine untere Stirnwand 9 des Kraftfahrzeugs angeschweißt, welche den vorderen Fußraum nach vorn hin begrenzt. Am unteren Ende der Federbeinaufnahme 2 erkennt man einen hinteren Radeinbau 10, der mit der Unterseite der Federbeinaufnahme 2 verschweißt ist.

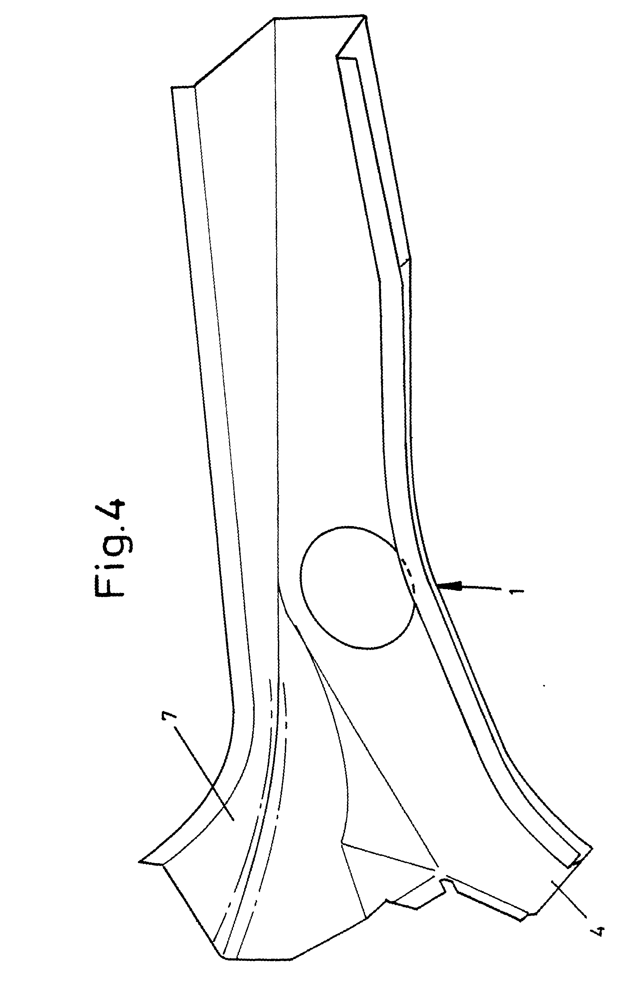

Die Fig. 4 zeigt ein für die Erfindung wesentliches Teilstück des Längsträgers 1. Zu erkennen ist insbesondere, daß der horizontale Bereich zur Bildung des Profilteils 7 nach oben hin erweitert ist und von oben gesehen in etwa einen Viertelkreisbogen beschreibt, so daß ein über 90° verlaufender Anlagebereich entsteht. An dieses Profilteil 7 ist der in den Fig. 2 und 3 gezeigte obere Gabelarm 3 angeschweißt. Ebenfalls zu sehen ist in Fig. 4 der Anfang des nach unten führenden unteren Gabelarms 4.

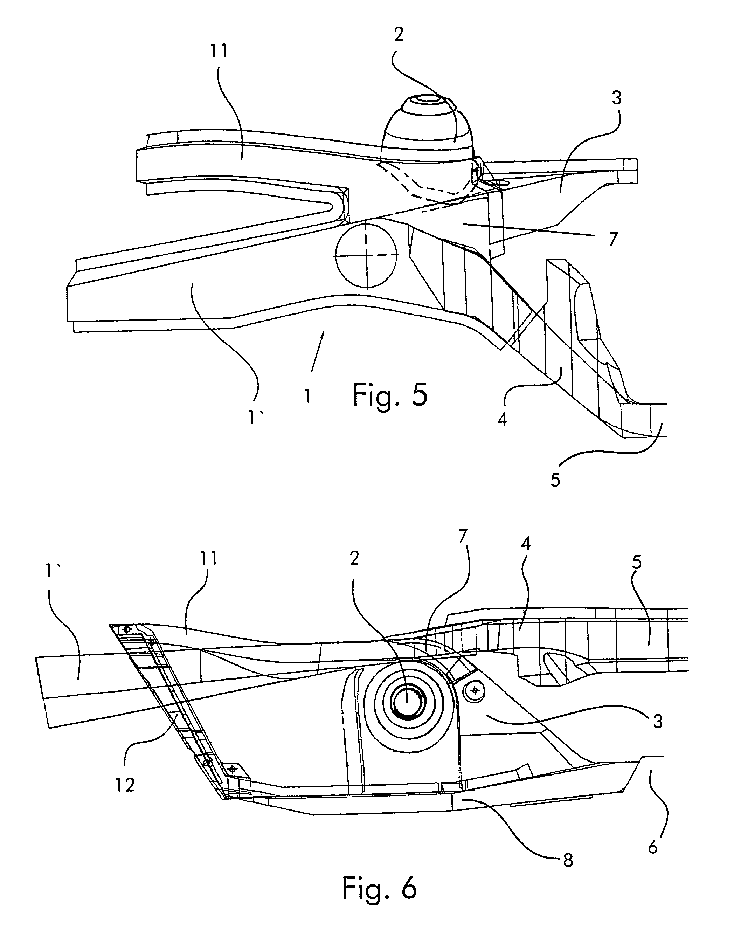

Fig. 5 und 6 zeigen einen zu einem Vorderrahmen eines Kraftfahrzeuges gehörenden Längsträger 1 mit einem vorderen Arm 1'. Dieser gabelt sich hinter einer allgemein als Dom bezeichneten Federbeinaufnahme 2 in einen oberen Gabelarm 3 und einen unteren Gabelarm 4. Der untere Gabelarm 4 verläuft nach unten und geht in ein horizontal und unter dem Bodenblech der Fahrgastzelle verlaufendes Versteifungsprofil 5 über. Der Gabelarm 4 kann auch, was hier nicht dargestellt ist, nach außen geführt werden und in den Türschweller übergehen. Schematisch dargestellt ist eine A-Säule 6 des Fahrzeuges, an die eine im wesentlichen horizontal verlaufende Radeinbaustrebe 8 in Höhe der Unterkante Windschutzscheibe angeschlossen ist. Der obere Gabelarm 3 läuft in etwa senkrecht in das rückwärtige Ende der Radeinbaustrebe 8 ein (siehe Fig. 5).

Ein Profilteil 7 bildet einen integralen Bestandteil des Längsträgers 1 und ist so geformt, daß es sich über einen Teilbereich der Mantelfläche der Federbeinaufnahme 2 erstreckt, wobei es entlang der Stoßkante mit dem Dom verschweißt ist. Das Profilteil 7 ist an seinem rückwärtigen Ende mit einem Anschlußprofil versehen, an das der obere Gabelarm 3 angesetzt und verschweißt ist.

An einen oberen Abschnitt des Profilteils 7 schließt sich eine nach vorne weisende Zusatzstrebe 11 an, die aus einem U-förmigen, zur Außenseite hin offenen Profil besteht. Diese Zusatzstrebe 11, der vordere Arm 1' des Längsträgers 1 und das Profilteil 7 sind aus einer Stahlplatine hergestellt.

Die Fig. 6 verdeutlicht, daß sich das Profilteil 7 des Längsträgers 1 sowie der sich daran anschließende obere Gabelarm 3 über etwa 90° der Mantelfläche der Federbeinaufnahme 2 erstrecken, so daß die Federbeinaufnahme 2 verwindungssteif im Vorderrahmen eingegliedert ist.

Die Fig. 6 läßt die Lage der Zusatzstrebe 11 erkennen. Sie verläuft oberhalb und in etwa parallel zum vorderen Arm 1' des Längsträgers 1 und ist mit einer quer im Fahrzeug verlaufenden Rahmenstrebe 12 des Fahrzeuges verschweißt, die die beiden den Motorraum seitlich begrenzenden Radeinbaustreben 8 miteinander verbindet. Die Zusatzstreben 11 bilden somit für jede Fahrzeugseite einen weiteren Lastarm zur Aufnahme von Stoßkräften, was zu einer besseren Lastverteilung bei einem Frontalaufprall des Fahrzeuges auf eine Hindernis führt. Außerdem wird die Federbeinaufnahme noch besser in die Karosseriestruktur integriert und in ihr abgestützt.

Die Zusatzstrebe 11 reicht in Fahrtrichtung des Fahrzeuges gesehen nicht so weit wie der vordere Arm 1', so daß bei einem leichten Frontalaufprall nur dieser beschädigt wird. Erst wenn die Kollision so heftig ist, daß der Vorderbau stärker zusammengedrückt wird, trägt die Zusatzstrebe 11 zur Energieaufnahme bei. Die Steifigkeiten der vorderen Arme 1' sowie der Zusatzstreben 11 können somit zur Erzielung eines progressiven Steifigkeitsverlaufs im Vorderbau aufeinander abgestimmt werden.

## Patentansprüche

1. Karosserievorderbau für ein Kraftfahrzeug, bei dem einen Vorderrahmen bildende Längsträger jeweils zur Fahrgastzelle hin gabelförmig in zwei Gabelarme aufgezweigt sind, von denen ein unterer Gabelarm in Höhe des Türschwellers und ein oberer Gabelarm in etwa in Höhe der Unterkante der Frontscheibe mit einer A-Säule des Kraftfahrzeugs und jeder Längsträger mit einer Federbeinaufnahme verbunden ist, wobei die Längsträger (1) jeweils in Längsrichtung mit einer Seite entlang eines Teilbereiches der Mantelfläche der Federbeinaufnahme (2) verlaufen und auf jeden Längsträger (1) ein entlang des Teilbereichs der Mantelfläche der Federbeinaufnahme (2) verlaufendes Profilteil (7) aufgesetzt und der obere Gabelarm (3) an dieses Profilteil (7) angeschlossen ist, **dadurch gekennzeichnet,** daß das Profilteil (7) mit dem oberen Gabelarm (3) von der Motorrauminnenseite aus über 90° entlang der Federbeinaufnahme (2) verläuft und dann mit der A-Säule (6) Verbindung hat.

2. Karosserievorderbau nach Anspruch 1, **dadurch gekennzeichnet,** daß das Profilteil (7) winkelförmig ausgebildet und mit einem zumindest in etwa horizontal ausgerichteten Schenkel an der Federbeinaufnahme (2) angeschweißt ist und daß der andere, in etwa senkrecht verlaufende Schenkel Verbindung mit einer unteren Stirnwand (9) des Kraftfahrzeugs hat.

3. Karosserievorderbau nach einem der vorangehenden Ansprüche, **dadurch gekennzeichnet,** daß an dem an der Federbeinaufnahme anliegenden Abschnitt (7) des Längsträgers eine nach vorne gerichtete Zusatzstrebe (11) anschließt.

4. Karosserievorderbau nach Anspruch 3, **dadurch gekennzeichnet,** daß im Längsträger (1) ein entlang des Teilbereichs der Mantelfläche der Federbeinaufnahme (2) verlaufendes Profilteil (7) ausgeformt ist und daß der obere Gabelarm (3) und die Zusatzstrebe (11) an diesem Profilteil (7) angeschlossen sind.

5. Karosserievorderbau nach Anspruch 4, **dadurch gekennzeichnet,** daß das Profilteil (7) mit dem oberen Gabelarm (3) von der Motorrauminnenseite aus über 90° entlang der Federbeinaufnahme (2) verläuft und dann mit der A-Säule (6) bzw. mit einer in die A-Säule (6) einmündenden Radeinbaustrebe (8) Verbindung hat.

6. Karosserievorderbau nach einem der vorangehenden Ansprüche 5 bis 7, **dadurch gekennzeichnet,** daß die Zusatzstrebe (11) mit ihrem vorderen Ende an einer den Motorraum das Fahrzeuges nach vorne begrenzenden Rahmenstrebe (12) anschließt.

7. Karosserievorderbau nach Anspruch 6, **dadurch gekennzeichnet,** daß die Strebe (11) in etwa parallel zum Längsträger (1) verläuft.

8. Karosserievorderbau nach Anspruch 3, **dadurch gekennzeichnet,** daß das vordere Ende des Längsträgers (1), in Fahrtrichtung betrachtet, vor dem vorderen Ende der Zusatzstrebe (11) liegt.

## Claims

1. Front body for a motor vehicle, in which longitudinal members forming a front frame each branch towards the passenger compartment in a fork shape into two fork arms of which a lower fork arm is connected at the level of the door sill and an upper fork arm is connected approximately at the level of the lower edge of the windscreen to an A-pillar of the motor vehicle, and each longitudinal member is connected to a MacPherson strut tower, wherein the longitudinal members (1) each run in the longitudinal direction with one side along a partial region of the peripheral surface of the MacPherson strut tower (2) and on each longitudinal member (1) is mounted a profile portion (7) running along the partial region of the peripheral surface of the MacPherson strut tower (2), and the upper fork arm (3) is connected to this profile portion (7), characterised in that the profile portion (7) with the upper fork arm (3) runs from the inside of the engine compartment over 90° along the MacPherson strut tower (2) and is then connected to the A-pillar (6).

2. Front body according to claim 1, characterised in that the profile portion (7) is of angular construction and welded by an at least approximately horizontally oriented arm to the MacPherson strut tower (2) and in that the other, approximately vertically extending arm is connected to a lower bulkhead (9) of the motor vehicle.

3. Front body according to any of the preceding claims, characterised in that connected to the section (7) of the longitudinal member adjacent to the MacPherson strut tower is a forwardly directed additional strut (11).

4. Front body according to claim 3, characterised in that in the longitudinal member (1) is formed a profile portion (7) running along the partial region of the peripheral surface of the MacPherson strut tower (2) and in that the upper fork arm (3) and the additional strut (11) are connected to this profile portion (7).

5. Front body according to claim 4, characterised in that the profile portion (7) with the upper fork arm (3) runs from the inside of the engine compartment over 90° along the MacPherson strut tower (2) and is then connected to the A-pillar (6) or to a wheel installation strut (8) which leads into the A-pillar (6).

6. Front body according to any of the preceding claims 5 to 7, characterised in that the additional strut (11) is connected by its front end to a frame strut (12) which defines the engine compartment of the vehicle at the front.

7. Front body according to claim 6, characterised in that the strut (11) runs approximately parallel to the longitudinal member (1).

8. Front body according to claim 3, characterised in that the front end of the longitudinal member (1), seen in the direction of travel, is located in front of the front end of the additional strut (11).

## Revendications

1. Avant-corps de carrosserie pour un véhicule automobile, dans lequel des longerons qui forment un avant-châssis se divisent en direction de l'habitacle en une fourche avec deux bras de fourches, parmi lesquels un bras de fourche inférieur et un bras de fourche supérieur sont reliés à une colonne A du véhicule, respectivement au niveau de la poutre de seuil de portière et au niveau du bord inférieur du pare-brise, et dans lequel chaque longeron est relié à un logement de jambe de suspension, les longerons (1), dans la direction longitudinale, s'étendant avec un côté le long d'une zone partielle de la surface extérieure du logement (2) de jambe de suspension et un tronçon profilé (7) qui s'étend le long d'une zone partielle du logement (2) de jambe de suspension étant placé sur chaque longeron (1) et le bras de fourche (3) supérieur étant relié à ce tronçon profilé (7), caractérisé en ce que le tronçon profilé (7) avec le bras de fourche (3) supérieur, depuis le côté intérieur du compartiment moteur s'étend sur 90° le long du logement (2) de jambe de suspension puis est relié à la colonne A (6).

2. Avant-corps de carrosserie selon la revendication 1, caractérisé en ce que le tronçon profilé (7) est conformé en cornière et est soudé au logement (2) de jambe de suspension par une aile qui s'étend au moins sensiblement horizontalement et en ce que l'autre aile qui s'étend sensiblement verticalement est reliée à une paroi frontale (9) inférieure du véhicule.

3. Avant-corps de carrosserie selon une des revendications précédentes, caractérisé en ce qu'une entretoise (11) additionnelle orientée vers l'avant se raccorde au tronçon (7) du longeron appliqué contre le logement de jambe de suspension.

4. Avant-corps de carrosserie selon la revendication 3, caractérisé en ce qu'un tronçon profilé (7), qui s'étend le long de la zonepartielle de la surface extérieure du logement (2) de jambe de suspension, est aménagé dans le longeron (1) et en ce que le bras de fourche (3) supérieur et l'entretoise additionnelle (11) sont reliés à ce tronçon profilé (7).

5. Avant-corps de carrosserie selon la revendication 4, caractérisé en ce que le tronçon profilé (7) avec le bras de fourche (3) supérieur, depuis le côté intérieur du compartiment moteur, s'étend sur 90° le long du logement (2) de jambe de suspension, puis est relié à la colonne A (6) ou à une entretoise (8) de passage de roue qui se raccorde à la colonne A (6).

6. Avant-corps de carrosserie selon une des revendications précédentes 5 à 7, caractérisé en ce que l'entretoise additionnelle (11) se raccorde par son extrémité antérieure à une entretoise (12) de châssis qui délimite le compartiment moteur du véhicule vers l'avant.

7. Avant-corps de carrosserie selon la revendication 6, caractérisé en ce que l'entretoise (11) s'étend sensiblement parallèlement au longeron (1).

8. Avant-corps de carrosserie selon la revendication 3, caractérisé en ce que l'extrémité antérieure du longeron (1), vu dans la direction de déplacement, est disposé en avant de l'extrémité antérieure de l'entretoise additionnelle (11).
